# EUROPÄISCHE PATENTSCHRIFT

(11) **EP 1 695 437 B1**
(45) Veröffentlichungstag und Bekanntmachung des Hinweises auf die Patenterteilung: **26.03.2008**
(21) Anmeldenummer: 04804748.4
(22) Anmeldetag: 09.12.2004
(51) Int. Cl.: H02P 6/14, H02P 6/16

(54) **ANSTEUERUNG EINES BÜRSTENLOSEN GLEICHSTROMMOTORS**
CONTROL FOR A BRUSHLESS DC MOTOR
COMMANDE D'UN MOTEUR A COURANT CONTINU SANS BALAIS

(30) Priorität: 09.12.2003 DE 10357501
(43) Veröffentlichungstag der Anmeldung: 30.08.2006
(73) Patentinhaber: BSH Bosch und Siemens Hausgeräte GmbH, 81739 München (DE)
(72) Erfinder: DE FILIPPIS, Pietro, I-20124 Milano (IT); HOCHHAUSEN, Ralf, 85051 Ingolstadt (DE); SEYFARTH, Jörg, 93057 Regensburg (DE)
(86) Internationale Anmeldenummer: PCT/EP2004/053374
(87) Internationale Veröffentlichungsnummer: WO 2005/060085

(56) Entgegenhaltungen:
- EP-A- 0 748 038
- WO-A-03/043172
- US-A- 5 872 435
- US-A1- 2003 164 692

## Beschreibung

Die vorliegende Erfindung betrifft eine Vorrichtung und ein Verfahren zum Ansteuern eines bürstenlosen Gleichstrommotors.

Eine Vorrichtung dieser Art umfasst herkömmlicherweise einen aus einem Gleichstromzwischenkreis versorgten Wechselrichter zum Speisen von Statorwicklungen des Gleichstrommotors und einen Mustergenerator zum Ansteuern von Schaltern des Wechselrichters mit einem periodischen Schaltsignalmuster derart, dass die Statorwicklungen in dem Motor ein rotierendes magnetisches Feld erzeugen, in welchem die Permanentmagnete des Rotors sich auszurichten versuchen. Das Drehmoment, das ein solcher Motor zu liefern im Stande ist, hängt ab vom Winkel zwischen dem permanenten Magnetfeld des Rotors und dem diesem voran eilenden Magnetfeld der Statorwicklungen. Für einen optimalen Wirkungsgrad des Motors sollten die vom Wechselrichter in die Statorwicklungen eingespeisten Ströme und die durch die Rotordrehung in diesen induzierte elektromotorische Kraft (EMK) in Phase sein. Das bedeutet, dass die ansteuernde Spannung der EMK des Motors mehr oder weniger voraus eilt. Der Voreilwinkel, bei dem der Motor den optimalen Wirkungsgrad erreicht, ist abhängig von der Last des Motors, d. h. dem von ihm ausgeübten Drehmoment, und der Drehzahl. Um den Motor mit einem möglichst hohen Wirkungsgrad zu betreiben, wird daher herkömmlicherweise Last und Drehzahl gemessen, und ein für eine gegebene Kombination von Werten der Last und der Drehzahl (im folgenden auch als Arbeitspunkt des Motors bezeichnet) als optimal bekannter Voreilwinkel wird eingestellt. Die Last ist bekanntlich proportional zum Spitzenstrom der einzelnen Statorwicklungen, weswegen zum Bestimmen der Last der Spitzenstrom mit Hilfe eines elektronischen Spitzenwertdetektors gemessen und daraus die Last berechnet wird.

Die Erfassung des Spitzenstroms ist aber insbesondere bei pulsbreitenmodulierter Ansteuerung des Wechselrichters und niedrigen Motorlasten problematisch, da infolge der kleinen Pulsbreiten schnelle und entsprechend kostspielige Komparatoren in einem Spitzenwertgleichrichter verwendet werden müssen, damit dieser auch bei niedrigen Tastverhältnissen den Spitzenstrom exakt wiedergeben kann. Ein Verfahren zum Ansteuern eines bürstenlosen Gleichstrommotors ist aus Dokument EP-A-748,038 bekannt.

Aufgabe der vorliegenden Erfindung ist, eine Vorrichtung und ein Verfahren zum Ansteuern eines bürstenlosen Gleichstrommotors anzugeben, die mit einfachen und preiswerten Mitteln einen Betrieb des Gleichstrommotors mit hohem Wirkungsgrad ermöglichen.

Die Aufgabe wird gelöst durch ein Verfahren mit den Merkmalen des Anspruchs 1 bzw. eine Vorrichtung mit den Merkmalen des Anspruchs 5.

Im Gegensatz zur Spitzenstromstärke ist die mittlere Stromstärke zwar auch bei geringen Lasten ohne Schwierigkeiten exakt zu erfassen, doch steht sie - weil ja gerade der Wirkungsgrad, also das Verhältnis des Produkts von Last und Drehzahl zur aufgenommenen elektrischen Leistung, vom Voreilwinkel abhängig ist - in keinem eindeutigen Verhältnis zur Motorlast. Dennoch kann sie überraschenderweise in einem iterativen Verfahren zum Einstellen des Arbeitspunkts eines bürstenlosen Gleichstrommotors herangezogen werden.

Bei dem Sollwert des Voreilwinkels handelt es sich vorzugsweise um denjenigen Wert des Voreilwinkels, der für die zugeordneten Werte von Drehzahl und mittlerer Leistungsaufnahme den Wirkungsgrad des Motors maximiert. Wenn eine Annäherung des Voreilwinkels an diesen Sollwert erfolgt, so führt die daraus resultierende Verbesserung des Wirkungsgrades des Motors bei gleichbleibender mittlerer Leistungsaufnahme des Motors zu einer Erholung der mechanischen Leistung, d.h. bei gleichbleibender Last zu einer Zunahme der Drehzahl. Indem durch Variieren der mittleren Klemmspannung des Motors die Drehzahl wieder auf ihren Sollwert zurückgeführt wird, wird im Laufe mehrer Iterationen der für diese Solldrehzahl optimale Arbeitspunkt des Motors erreicht.

Zur Ermittlung des Sollwerts des Voreilwinkels wird vorzugsweise ein Kennfeld herangezogen, das für eine Mehrzahl von jeweils durch eine Drehzahl und eine mittlere Leistungsaufnahme definierten Arbeitspunkten des Motors den Voreilwinkel mit dem höchsten Wirkungsgrad spezifiziert. Ein solches im Allgemeinen für die Bauart des Motors spezifisches Kennfeld wird vorzugsweise vorab empirisch ermittelt und kann für die erfindungsgemäße Ansteuerung in Form eines Speicherbausteins zur Verfügung gestellt werden, der für die diversen Arbeitspunkte den jeweils optimalen Voreilwinkel angibt.

Da ein solches Kennfeld nur eine begrenzte Zahl diskreter Arbeitspunkte umfassen kann, wird im Allgemeinen der Lastwinkel für eine aktuelle Drehzahl und mittlere Leistungsaufnahme aus dem Kennfeld durch Interpolation erhalten.

Um die mittlere Leistungsaufnahme des Motors zu beeinflussen, wird vorzugsweise die an ihn angelegte mittlere Klemmenspannung durch Pulsbreitenmodulation variiert.

Eine Ansteuervorrichtung, die zur Durchführung des Verfahrens geeignet ist, umfasst einen aus einem Gleichstromzwischenkreis versorgten Wechselrichter zum Speisen des Gleichstrommotors, einen Mustergenerator zum Ansteuern von Schaltern des Wechselrichters mit einem periodischen Schaltsignalmuster von variabler Frequenz und Phase, der einen Eingang für ein für die momentane Phasenlage des Rotors des Gleichstrommotors repräsentatives Signal aufweist, wobei der Mustergenerator über Mittel zum Erfassen der von dem Wechselrichter abgegebenen mittleren Stromstärke und Mittel zum Einstellen eines Phasenversatzes zwischen der Phasenlage des Rotors und dem Schaltsignalmuster in Abhängigkeit von der erfassten mittleren Stromstärke und der Drehzahl des Motors verfügt.

Um im Falle einer Korrektur des Phasenversatzes einem Abdriften der Drehzahl des Motors entgegenwirken zu können, sind vorzugsweise Mittel zum Regeln einer mittleren Klemmenspannung des Motors anhand einer Solldrehzahl vorgesehen.

Die Mittel zum Einstellen des Phasenversatzes umfassen vorzugsweise eine auf die Frequenz des für die Phasenlage des Rotors repräsentativen Eingangssignals einrastbare Phasenregelkreis(PLL)-Schallung. Zum Einstellen des Phasenversatzes sind Steuermittel zum Vorgeben eines Ziel-Phasenversatzes in Abhängigkeit von erfasster Leistung und Drehzahl des Motors vorgesehen. Diese Steuermittel enthalten vorzugsweise den bereits erwähnten Speicher für das Kennfeld, das für eine Mehrzahl von Arbeitspunkten einen Ziel-Phasenversatz angibt, der den Wirkungsgrad des Motors maximiert.

Die Drehzahl des Motors kann mit Hilfe eines an den Motor gekoppelten Drehzahlensensors erfasst werden; vorzugsweise weisen allerdings die Mittel zum Einstellen des Phasenversatzes selbst Mittel zum Ableiten der Drehzahl aus dem für die Phasenlage des Rotors repräsentativen Eingangssignal auf.

Die Mittel zum Einstellen des Phasenversatzes können unterteilt sein in einen Sollwertgeber, der jeweils einen Sollwert des Phasenversatzes für den aktuellen Arbeitspunkt festlegt und ein für diesen Sollwert repräsentatives Signal erzeugt, und einen Regler zum Angleichen des tatsächlichen Phasenversatzes an diesen Sollwert anhand des repräsentativen Signals. Dabei sollte das repräsentative Signal Werte oberhalb und unterhalb eines für einen Phasenversatz von 0° repräsentativen Werts annehmen können, so dass in dem Regler eine einheitliche Verarbeitung von für positive und negative Phasenversätze repräsentativen Signalen möglich ist.

Weitere Merkmale und Vorteile der Erfindung ergeben sich aus der nachfolgenden Beschreibung von Ausführungsbeispielen mit Bezug auf die beigefügten Figuren. Es zeigen:

Fig. 1 ein Blockdiagramm einer erfindungsgemäßen Ansteuervorrichtung und eines von ihr gesteuerten bürstenlosen Gleichstrommotors;

Fig. 2 ein schematisches Schaltbild eines in der Ansteuervorrichtung der Fig. 1 verwendeten Wechselrichters;

Fig. 3 den zeitlichen Ablauf der zyklisch wiederkehrend an den Motor angelegten Schaltzustände; und

Fig. 4 ein Diagramm, welches die Wanderung des Arbeitspunktes eines mit der erfindungsgemäßen Vorrichtung angesteuerten bürstenlosen Gleichstrommotors veranschaulicht.

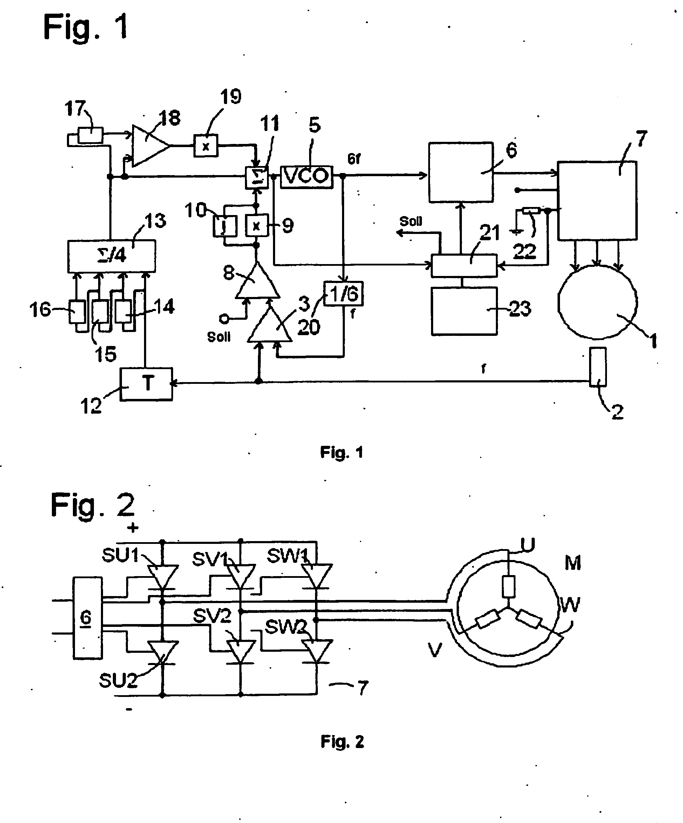

In dem Blockdiagramm der Fig. 1 bezeichnet 1 einen bürstenlosen Gleichstrommotor, dessen Rotor n = 4 Polpaare aufweist. Der Gleichstrommotor 1 ist durch einen Wechselrichter 7 gespeist, der in Fig. 2 detaillierter dargestellt ist. Er umfasst sechs Schalter SU1, SV1, SW1, SUZ2, SV2, SW2, von denen jeweils die Schalter SU1, SV1, SW1 zwischen einer positiven Versorgungsklemme (+) und einer Phase U, V bzw. W des Motors 1 angeordnet sind und die Schalter SU2, SV2, SW2 jeweils zwischen einer dieser drei Phasen und einer negativen Versorgungsklemme (-) angeordnet sind. Bei den Schaltern kann es sich in an sich bekannter Weise um IGBTs mit einer parallel geschalteten Freilaufdiode handeln.

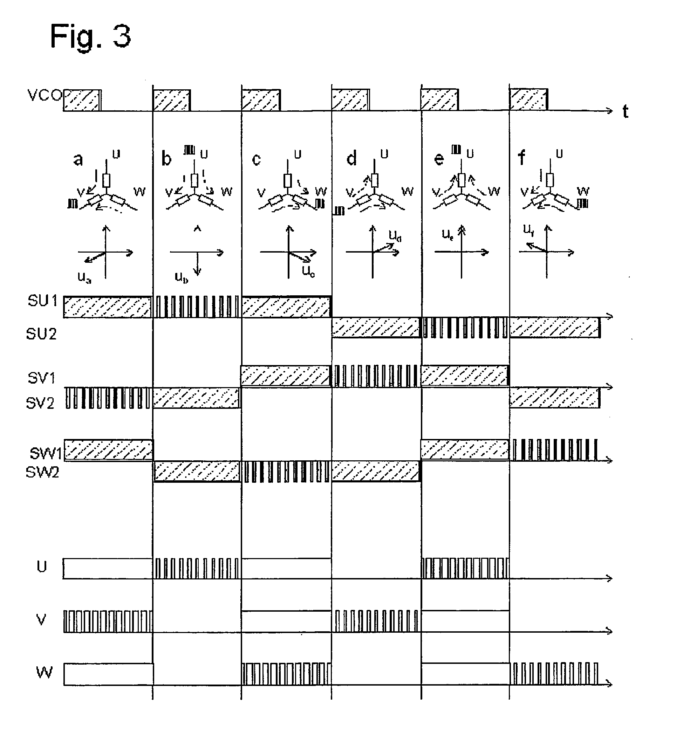

Die Schalter des Wechselrichters 7 sind durch eine Steuerschaltung 6 angesteuert, die zyklisch wiederkehrend sechs verschiedene Schaltzustände an die Schalter anlegt, die mit Bezug auf Fig. 3 noch genauer erläutert werden.

Ein Hall-Sensor 2 ist in unmittelbarer Nachbarschaft des Rotors des Motors 1 angeordnet, um das Feld jedes einzelnen ihn passierenden Pols des Rotors zu erfassen. Der Hall-Sensor 2 liefert ein Ausgangssignal, das jeweils beim Passieren eines ersten Poltyps eine ansteigende und beim Passieren des anderen Poltyps eine abfallende Flanke aufweist. Die Frequenz f des Ausgangssignals des Hall-Sensors 2 beträgt somit das n-Fache der Drehfrequenz des Motors 1.

Das Ausgangssignal des Hall-Sensors 2 liegt an einem ersten Eingang eines Phasenkomparators 3 an, dessen zweiter Eingang mit einem Vergleichssignal versorgt ist, dessen Zustandekommen noch erläutert wird. Der Phasenkomparator 3 kann z.B. durch einen elektronischen Zähler gebildet sein, der jeweils bei Eintreffen einer abfallenden Signalflanke vom Hall-Sensor 2 beginnt, Impulse eines Taktsignals, dessen Frequenz ein Vielfaches der Frequenz f ist, zu zählen, bis eine abfallende Signalflanke am zweiten Signaleingang empfangen wird, und das Zählergebnis als Messwert für eine Phasendifferenz zwischen den zwei Signalen ausgibt.

Das Ausgangssignal des Phasenkomparators 3 bildet das nichtinvertierte Eingangssignal eines Differenzverstärkers 8, an dessen invertierendem Eingang ein von einem Mikrocontroller 21 bereitgestelltes, für einen gewünschten Phasenversatz zwischen dem Muster der Schaltzustände und dem Ausgangssignal des Hall-Sensors repräsentatives Sollwertsignal anliegt. Der Pegel dieses Sollwertsignals steht in einem linearen Zusammenhang mit dem Soll-Voreilwinkel und kann Werte in einem Intervall annehmen, dessen Grenzen jeweils Soll-Voreilwinkeln kleiner bzw. größer 0° entsprechen. Vorzugsweise entspricht die untere Grenze einem Soll-Voreilwinkel von -2π/3 und die obere Grenze einem Voreilwinkel von +4π/3, so dass Werte des Soll-Voreilwinkels um 0° durch eine stetige Änderung des Pegels des Sollwertsignals eingestellt werden können.

An den Ausgang des Differenzverstärkers 8 ist ein Proportional/Integralregler, bestehend aus einem Gewichtungsteil 9, welches das Ausgangssignal des Differenzverstärkers 8 mit einem vorgegebenen Gewichlungsfaktor nultipliziert, und einem Integrator 10 zum Integrieren des Ausgangssignals des Differenzverstärkers 8, angeschlossen. Die additiv überlagerten Ausgangssignale von Gewichtungsteil 9 und Integrator 10 werden einem spannungsgesteuerten Oszillator 5 als ein Frequenzsteuersignal zusammen mit weiteren in einem Addierglied 11 hinzuaddierten Beiträgen zugeführt.

An den Ausgang des Hall-Sensors 2 ist neben dem Phasenkomparator 3 eine Periodenmessschaltung 12 angeschlossen, die jeweils die Zeitdauer zwischen zwei aufeinanderfolgenden abfallenden Flanken des Signals vom Hall-Sensor 2 misst und als Ausgangssignal an eine Mittelwertschaltung 13 und ein erstes Schieberegister 14 liefert. An den Ausgang des ersten Schieberegisters ist ein Eingang eines zweiten Schieberegisters 15 und ein zweiter Eingang der Mittelwertschaltung 13 angeschlossen; an den Ausgang des zweiten Schieberegisters ein drittes Schieberegister 16 und ein dritter Eingang der Mittelwertschaltung 13, und an den Ausgang des dritten Schieberegisters ein vierter Eingang der Mittelwertschaltung 13. Mit jedem neuen Periodenmesswert, den die Messschaltung 12 liefert, triggert sie die Schieberegister 14, 15, 16, so dass diese den jeweils an ihrem Eingang anliegenden Messwert übernehmen und ausgeben. So liegen an den Eingängen der Mittelwertschaltung 13 immer die vier jüngsten Messwerte von Periodendauern des Hall-Sensorsignals an. Die Mittelwertschaltung 13 liefert an ihrem Ausgang den Mittelwert dieser Messwerte. (Allgemein sind bei einer Polpaarzahl des Rotors von n immer n Eingänge und n-1 Schieberegister vorgesehen, so dass über die Zahl von Perioden des Hall-Sensorsignals gemittelt wird, die einer vollständigen Umdrehung des Rotors entspricht.) Zyklische Schwankungen der Periodendauer, die aus Ungleichmäßigkeiten in der Anordnung der vier Polpaare des Rotors resultieren können, sind somit im Ausgangssignal der Mittelwertschaltung 13 beseitigt. Dieses Ausgangssignal liefert einen wesentlichen Beitrag zur Eingangsspannung des spannungsgesteuerten Oszillators 5. Somit liegt nach zwei Referenzlagendurchgängen des Rotors eine Eingangsspannung am Oszillator 5 an, die nicht weit von der Eingangsspannung entfernt ist, die sich im stationären Regime einstellen würde, und die Frequenz des Oszillators 5 kann schnell auf die des Rotors einrasten.

Der Ausgang der Mittelwertschaltung 13 ist ferner an eine Differenzschaltung 18 einerseits direkt, andererseits über ein viertes Schieberegister 17 angeschlossen, das in gleicher Weise wie die Schieberegister 14 bis 16 getriggert wird, so dass die DifferenzSchaltung 18 als Ausgangssignal die Differenz zwischen zwei aufeinanderfolgenden gemittelten Perioden des Hall-Sensorsignals liefert. Das Ausgangssignal der Differenzschaltung 18 entspricht also der mittleren Änderung der Periodendauer und zeigt einen beschleunigten oder verlangsamten Lauf des Motors 1 an. Ein solcher beschleunigter oder verlangsamter Lauf wird berücksichtigt, indem das Ausgangssignal der Differenzschaltung 18, in einem Gewichtungsteil 19 mit einem Faktor von 0,5 gewichtet, zu den bereits erwähnten Beiträgen zum Eingangssignal des Oszillators 5 im Addierglied 11 hinzuaddiert wird. So berücksichtigt die Schwingung des Oszillators 5 bereits eine Änderung der Periodendauer, die zwar in Extrapolation der Vergangenheit zu erwarten, bisher aber noch nicht gemessen worden ist.

Der spannungsgesteuerte Oszillator 5 liefert eine Schwingung, deren Frequenz im stationären Regime sechs mal so hoch wie die des Hall-Sensorsignals ist. Ein 1/6-Frequenzteiler 20 erzeugt hieraus das dem Phasenkomparator 3 zugeführte Vergleichssignal. Die Steuerschaltung 6 empfängt das Ausgangssignal mit der Frequenz 6f vom spannungsgesteuerten Oszillator 5 und leitet daraus die Ansteuersignale für die Schalter des Wechselrichters 7 ab. In dem Zeitdiagramm der Fig. 3 ist mit VCO die Schwingung des spannungsgesteuerten Oszillators 5 bezeichnet. Auf deren ansteigende Flanke reagiert die Steuerschaltung 6, indem sie jeweils von einem von sechs zyklisch nacheinander erzeugten Schaltzuständen a, b, c, d, e, f zum nächsten wechselt.

Fig. 3 zeigt für jeden der Schaltzustände a bis f den Zustand der Schalter des Wechselrichters 7 sowie die daraus resultierenden Spannungen an den Phasen U, V, W des Elektromotors 1. Im Zustand a sind die Schalter SU1, SW1 geschlossen. Die Schalter SU2, SW2, SV1 sind offen, und der Schalter SV2 wird gepulst geöffnet und geschlossen, wobei das Tastverhältnis durch ein Leistungssteuersignal festgelegt ist, das die Steuerschaltung 6 von dem Mikrocontroller 21 empfängt. Entsprechend dem Tastverhältnis des Schalters SV2 fließt Strom durch die Phasen U, V bzw. W, V des Motors, und die resultierenden Magnetfelder überlagern sich zu einem Raumzeiger uₐ. Im nachfolgenden Schaltzustand b sind die Schalter SV2, SW2 offen, SU2, SV1, SW1 geschlossen und SU1 ist mit einem durch das Leistungssteuersignal des Mikrocontrollers 21 festgelegten Tastverhältnis pulsbreitenmoduliert; entsprechend fließt Strom durch die Phasen U, V und U, W, und es resultiert ein Raumzeiger u_{b}, der gegenüber uₐ um 60° im Gegenuhrzeigersinn gedreht ist. Die Zustände geschlossen, offen, pulsbreitenmoduliert der Schalter für die Zustände c, d, e, f und die daraus resultierenden Stromverteilungen und Raumzeiger können aus Fig. 3 abgelesen werden und brauchen hier nicht im Detail erläutert zu werden. Wesentlich ist, dass sechs Perioden des Signals VCO eine Raumzeigerdrehung um 360° ergeben.

Selbstverständlich könnten die von der Steuerschaltung 6 gesteuerten Zustände des Wechselrichters 7 auch andere als die in Fig. 3 gezeigten sein, insbesondere käme auch, wenn auch weniger bevorzugt, ein Zustandsmuster in Betracht, bei dem jede Phase U, V, W des Motors 1 jeweils einen Zustand lang durch Öffnen beider zugeordneter Schalter stromlos gehalten wird, dann zwei Zustände lang mit der positiven Versorgungsspannung verbunden, dann wieder einen Zustand lang stromlos gehalten und schließlich zwei Zustände lang mit der negativen Versorgungsklemme verbunden wird und die drei Phasen jeweils um zwei Zustände gegeneinander phasenverschoben sind.

Der Wirkungsgrad des Elektromotors 1 ist abhängig vom Voreilwinkel zwischen dem von den Wicklungen seines Stators erzeugten magnetischen Feld und dem in diesem Feld rotierenden Rotor. Für jeden durch eine Drehzahl und ein Drehmoment oder in äquivalenter Weise durch eine Drehzahl und eine mechanische Leistung gekennzeichneten Arbeitspunkt gibt es einen optimalen Voreilwinkel, der beispielsweise für ein bestimmtes Motormodell empirisch ermittelt werden kann. Da, wie eingangs erläutert, die Ermittlung des Spitzenstroms, aus dem die Last (das Drehmoment) eindeutig berechnet werden könnte, aufwändig ist, wird bei der erfindungsgemäßen Ansteuervorrichtung ein anderer Ansatz gewählt. Hier erfasst der Mikrocontroller 21 1 die elektrische Leistungsaufnahme des Motors 1, beispielsweise, wie in Fig. 1 gezeigt, mit Hilfe eines im Zwischenkreis des Wechselrichters 7 angeordneten Vorwiderstandes 22, an welchem eine zur Zwischenkreisstromstärke proportionale Spannung abfällt. Wenn die Zwischenkreisspannung als konstant vorausgesetzt wird, genügt die Messung dieser Stromstärke, um die elektrische Leistungsaufnahme zu ermitteln; anderenfalls kann vorgesehen werden, dass der Mikrocontroller 21 auch die Zwischenkreisspannung misst und die Leistungsaufnahme als Produkt von Zwischenkreisspannung und -Stromstärke berechnet. Die Drehzahl des Motors 1 erfasst der Mikrocontroller 21 aus dem hierzu proportionalen Ausgangssignal des Addiergliedes 11.

In einem an den Mikrocontroller 21 angeschlossenen Speicherbaustein 23 ist ein Kennfeld gespeichert, das für einen Satz von Arbeitspunkten den optimalen Voreilwinkel angibt. Dieser Satz von Arbeitspunkten ist in an sich bekannter Weise so gewählt, dass für alle nicht in ihm enthaltenen praktisch relevanten Arbeitspunkte des Motors 1 der jeweils optimale Voreilwinkel durch Interpolation in dem Mikrocontroller 21 berechnet werden kann.

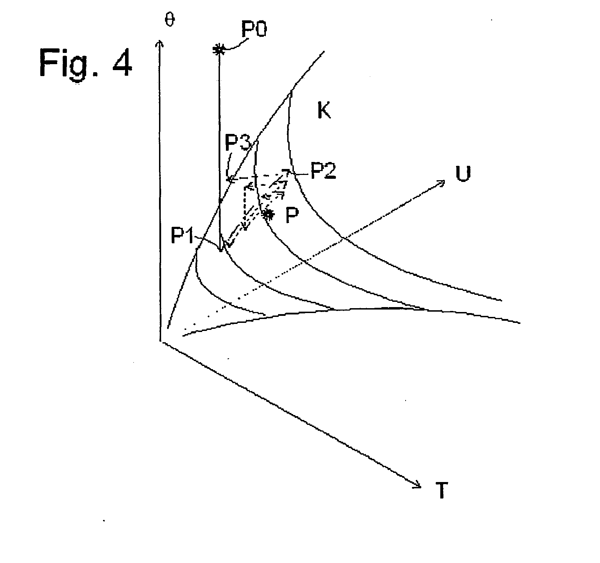

Die Arbeitsweise des Mikrocontrollers wird anhand von Fig. 4 erläutert. Die Figur ist ein dreidimensionales Diagramm, in der eine gekrümmte Oberfläche K den in dem Kennfeld abgelegten Zusammenhang zwischen Drehzahl U, mechanischer Leistung P und optimalem Voreilwinkel θ darstellt. Ein Punkt P0 in diesem Diagramm stellt einen willkürlichen Ausgangspunkt des von dem Mikrocontroller 21 ausgeführten Regelverfahrens dar. Er ist gekennzeichnet durch einen Wert der Drehzahl U, den der Mikrocontroller aus dem Ausgangssignal des Addiergliedes 11 ableitet, einen (willkürlichen) Voreilwinkel θ, den der Mikrocontroller 21 als Sollwert an den Differenzverstärker 8 anlegt, und einer mechanischen Leistung P des Motors, die der Mikrocontroller 21 aus der aufgenommenen elektrischen Leistung durch Multiplizieren mit einem bekannten Wirkungsgrad η des Motors abschätzt. Dieser Wirkungsgrad η ist derjenige Wirkungsgrad, den der Motor bei der gegebenen Drehzahl mit optimal eingestelltem Voreilwinkel θ erreicht. Am Punkt P0 ist der Voreilwinkel höher als der optimale Wert, so dass die mechanische Leistung des Motors tatsächlich niedriger ist als der vom Mikrocontroller 21 abgeschätzte Wert. Dies ist für die Zwecke des Verfahrens jedoch nicht störend. Anhand der so erhaltenen Werte von Drehzahl und mechanischer Leistung bestimmt der Mikrocontroller 21 anhand des Kennfeldes K den diesem Arbeitspunkt entsprechenden optimalen Voreilwinkel (wobei er den abgeschätzten Wert der mechanischen Leistung als den wahren Wert unterstellt) und gibt den so ermittelten Voreilwinkel dem Differenzverstärker 8 als Sollwert vor. So wird in dem Diagramm der Fig. 4 der Punkt P1 erreicht.

Da die vom Mikrocontroller angenommene mechanische Leistung des Motors auf einer Näherung beruht, ist in Wirklichkeit noch kein Punkt auf der Oberfläche K erreicht, aber durch die Korrektur des Voreilwinkels ist der Wirkungsgrad des Motors 1 verbessert. Infolgedessen nehmen Drehzahl und/oder mechanische Leistung des Motors zu, und der abgeschätzte Arbeitspunkt wandert nach P2. Der Mikrocontroller 21 erkennt nun eine Überschreitung der Solldrehzahl und setzt das der Steuerschaltung 6 durch das oben erwähnte Leistungssteuersignal vorgegebene Tastverhältnis herab. Bei gleichbleibendem Voreilwinkel nehmen Drehzahl und/oder Leistung wieder ab, und der Punkt P3 wird erreicht. An diesem Punkt wird, wie zuvor am Punkt P0, für den angenommenen Arbeitspunkt der optimale Voreilwinkel aus dem Kennfeld abgeschätzt und eingestellt. So wiederholt sich das Verfahren iterativ, bis es schließlich gegen den Punkt P konvergiert, wo der Voreilwinkel θ optimal eingestellt ist und der Wirkungsgrad des Motors tatsächlich gleich η ist.

## Patentansprüche

1. Verfahren zum Ansteuern eines bürstenlosen Gleichstrommotors (1) bei dem folgende Schritte a), b), c) und d) iterativ wiederholt werden, bis ein für eine vorgegebene Solldrehzahl optimaler Arbeitspunkt des Motors (1) erreicht ist:
a) Einstellen der Drehzahl des Motors (1) auf den Wert der Solldrehzahl durch Variieren einer mittleren Klemmenspannung des Motors (1), wobei die mittlere Klemmenspannung des Motors (1) durch Pulsbreitenmodulation variiert wird;
b) Erfassen der mittleren Leistungsaufnahme (P) des Motors (1) und des Voreilwinkels (θ) zwischen Rotor des Motors und antreibendem Magnetfeld;
c) Ermittlung eines Sollwertes für den Voreilwinkel (θ) als Funktion der Drehzahl (U) und der mittleren Leistungsaufnahme (P) aus einem Kennfeld (K);
d) Annähern des Voreilwinkels (θ) an den vorgegebenen Sollwert, wodurch die Drehzahl des Motors (1) zunimmt.

2. Verfahren nach Anspruch 1, **dadurch gekennzeichnet, dass** der Sollwert derjenige Wert des Voreilwinkels (θ) ist, der für die zugeordneten Werte von Drehzahl und mittlerer Leistungsaufnahme den Wirkungsgrad (η) des Motors (1) maximiert.

3. Verfahren nach Anspruch 1 oder 2, **dadurch gekennzeichnet, dass** das Kennfeld (K) für eine Mehrzahl von jeweils durch eine Drehzahl und eine mittlere Leistungsaufnahme definierten Arbeitspunkten des Motors den Voreilwinkel mit dem höchsten Wirkungsgrad spezifiziert.

4. Verfahren nach Anspruch 3, **dadurch gekennzeichnet, dass** der Sollwert des Voreilwinkels für die aktuelle Drehzahl und mittlere Leistungsaufnahme aus dem Kennfeld durch Interpolation erhalten wird.

5. Ansteuervorrichtung für einen bürstenlosen Gleichstrommotor (1), mit einem aus einem Gleichspannungszwischenkreis (+, -) versorgten Wechselrichter (7) zum Speisen des Gleichstrommotors (1), einem Mustergenerator (3, 5, 6, 8-23) zum Ansteuern von Schaltern (SU1, SU2, SV1, SV2, SW1, SW2) des Wechselrichters (7) mit einem periodischen Schaltsignalmuster von variabler Frequenz und Phase, der einen Eingang für ein für eine momentane Phasenlage des Rotors des Gleichstrommotors (1) repräsentatives Signal aufweist, **dadurch gekennzeichnet, dass** der Mustergenerator Mittel (22, 21) zum Erfassen der von dem Wechselrichter abgegebenen mittleren Stromstärke und Mittel (3, 5, 8-23) zum Einstellen eines Voreilwinkels zwischen der Phasenlage des Rotors und dem Schaltsignalmuster in Abhängigkeit von der erfassten mittleren Stromstärke und der Drehzahl des Motors (1) aufweist, dass die Ansteuervorrichtung Mittel (21-23) zum Regeln einer mittleren Klemmenspannung des Motors (1) anhand einer Solldrehzahl aufweist, und dass die Ansteuervorrichtung zur Durchführung des Verfahrens nach einem der Ansprüche 1 bis 4 ausgebildet ist.

6. Ansteuervorrichtung nach Anspruch 5, **dadurch gekennzeichnet, dass** die Mittel (3, 5, 8-23) zum Einstellen des Voreilwinkels eine auf die Frequenz des für die Phasenlage des Rotors repräsentativen Eingangssignals einrastbare PLL-Schaltung (3, 5, 8-20) umfassen.

7. Ansteuervorrichtung nach Anspruch 5 oder 6, **dadurch gekennzeichnet, dass** die Mittel (3, 5, 8-23) zum Einstellen des Voreilwinkels Steuermittel (21, 23) zum Vorgeben eines Sollwertes des Voreilwinkels in Abhängigkeit von erfasster Leistung und Drehzahl des Motors umfassen.

8. Ansteuervorrichtung nach Anspruch 7, **dadurch gekennzeichnet, dass** die Steuermittel (21, 23) einen Speicher (23) für ein Kennfeld des Motors (1) umfassen, das für Kombinationen von Drehzahl und Leistung des Motors jeweils den Sollwert des Voreilwinkels angibt, der die Stromaufnahme des Motors (1) minimiert.

9. Ansteuervorrichtung nach einem der Ansprüche 5 bis 8, **dadurch gekennzeichnet, dass** die Mittel (3, 5, 8-23) zum Einstellen des Voreilwinkels Mittel (21) zum Ableiten der Drehzahl aus dem für die Phasenlage des Rotors repräsentativen Eingangssignal umfassen.

10. Ansteuervorrichtung nach einem der Ansprüche 5 bis 9, **dadurch gekennzeichnet, dass** die Mittel zum Einstellen des Voreilwinkels einen Sollwertgeber (21, 23) zum Erzeugen eines für einen Sollwert des Voreilwinkels repräsentativen Signals und einen Regler (3, 5, 8-20) zum Angleichen des tatsächlichen Voreilwinkels an den Sollwert anhand des repräsentativen Signals umfassen, wobei das repräsentative Signal Werte oberhalb und unterhalb eines für einen Voreilwinkel von 0° repräsentativen Werts annehmen kann.

## Claims

1. Method for drive control of a brushless direct current motor (1) in which the following steps a), b), c) and d) are iteratively repeated until a working point of the motor (1) optimal for a predetermined target rotational speed is achieved:
a) setting of the rotational speed of the motor (1) to the value of the target rotational speed by varying a mean terminal voltage of the motor (1), wherein the mean terminal voltage of the motor (1) is varied by a pulse width modulation;
b) detecting the mean power consumption (P) of the motor (1) and the lead angle (θ) between rotor of the motor and driving magnetic field;
c) determining a target value for the lead angle (θ) as a function of the rotational speed (U) and the mean power consumption (P) of a characteristic values field (K); and
d) assimilating the angle (θ) of advance to the predetermined target value, whereby the rotational speed of the motor (1) increases.

2. Method according to claim 1, **characterised in that** the target value is that value of the lead angle (θ) which maximises the efficiency (η) of the motor (1) for the associated values of rotational speed and mean power consumption.

3. Method according to claim 1 or 2, **characterised in that** the characteristic values field (K) specifies the lead angle with the highest efficiency for a plurality of working points, which are respectively defined by a rotational speed and a mean power consumption, of the motor.

4. Method according to claim 3, **characterised in that** the target value of the lead angle for the instantaneous rotational speed and mean power consumption is obtained from the characteristics value field by interpolation.

5. Drive control device for a brushless direct current motor (1) with a dc-ac converter (7), which is supplied from a direct voltage intermediate circuit (+, -), for power supply of the direct current motor (1), a pattern generator (3, 5, 6, 8-23) for drive control of switches (SU1, SU2, SV1, SV2, SW1, SW2) of the dc/ac converter (7) by a periodic switching signal pattern of variable frequency and phase, which has an input for a signal representative of an instantaneous phase position of the rotor of the direct current motor (1), **characterised in that** the pattern generator comprises means (22, 21) for detection of the mean power intensity delivered by the dc/ac converter and means (3, 5, 8-23) for setting a lead angle between the phase position of the motor and the switching signal pattern in dependence on the detected mean current intensity and the rotational speed of the motor (1), that the drive control device comprises means (21-23) for regulating a mean terminal voltage of the motor (1) on the basis of a target rotational speed and that the drive control device is constructed for carrying out the method according to one of claims 1 to 4.

6. Drive control device according to claim 5, **characterised in that** the means (3, 5, 8-23) for setting the lead angle comprise a PLL circuit (3, 5, 8-20) latchable to the frequency of the input signal representative of the phase position of the rotor.

7. Drive control device according to claim 5 or 6, **characterised in that** the means (3, 5, 8-23) for setting the lead angle comprise control means (21, 23) for presetting a target value of the lead angle in dependence on detected power and rotational speed of the motor.

8. Drive control device according to claim 7, **characterised in that** the control means (21, 23) comprises a memory (23) for a characteristic values field of the motor (1), which for the combination of rotational speed and power of the motor indicates in each instance the target value of the lead angle which minimises the power consumption of the motor (1).

9. Drive control device according to one of claims 5 to 8, **characterised in that** the means (3, 5, 8-23) for setting the lead angle comprise means (21) for deriving the rotational speed from the input signal representative of the phase position of the rotor.

10. Drive control device according to one of claims 5 to 9, **characterised in that** the means for setting the lead angle comprise a target value transmitter (21, 23) for producing a signal which is representative of a target value of the lead angle and a regulator (3, 5, 8-20) for adapting the actual lead angle to the target value on the basis of the representative signal, wherein the representative signal can adopt values above and below a value representative of a lead angle of 0°.

## Revendications

1. Procédé de commande d'un moteur à courant continu (1), sans balais, dans lequel les étapes a), b), c) et d) ci-dessous sont répétées par itérations successives jusqu'à ce que le moteur (1) atteigne un point de travail optimum pour une vitesse de rotation de consigne prédéterminée :
a) réglage de la vitesse de rotation (1) à la valeur de consigne de la vitesse de rotation par modification de la tension moyenne aux bornes du moteur (1), la tension moyenne aux bornes du moteur (1) étant modifiée par modulation de largeur d'impulsions,
b) détection de la puissance moyenne consommée (P) du moteur (1) et de l'angle d'avancement (θ) entre le rotor du moteur et le champ magnétique d'entraînement,
c) détermination d'une valeur de consigne de l'angle d'avance (θ) en fonction de la vitesse de rotation (U) et de la puissance moyenne consommée (P) dans un champ de caractéristiques (K), et
d) rapprochement de l'angle d'avance (θ) de la valeur de consigne prédéterminée, ce qui entraîne une augmentation de la vitesse de rotation du moteur (1).

2. Procédé selon la revendication 1, **caractérisé en ce que** la valeur de consigne est la valeur de l'angle d'avance (θ) qui maximise le rendement (η) du moteur (1) pour les valeurs associées de vitesse de rotation et de puissance moyenne consommée.

3. Procédé selon les revendications 1 ou 2, **caractérisé en ce que** le champ de caractéristiques (K) spécifie pour plusieurs points de travail du moteur, définis chacun par une vitesse de rotation et une puissance moyenne consommée, l'angle d'avance qui fournit le plus haut rendement.

4. Procédé selon la revendication 3, **caractérisé en ce que** la valeur de consigne de l'angle d'avance pour la vitesse de rotation actuelle et la puissance moyenne consommée est obtenue par interpolation dans le champ de caractéristiques.

5. Dispositif de commande pour un moteur à courant continu (1), sans balais, qui présente un onduleur (7) alimenté par un circuit intermédiaire à tension continue (+, -) pour alimenter le moteur à courant continu (1), un générateur de motifs (3, 5, 6, 8-23) qui commande les commutateurs (SU1, SU2, SV1, SV2, SW1, SW2) de l'onduleur (7) à l'aide d'un motif périodique de signaux de commutation dont la fréquence et la phase sont variables, qui présente une entrée pour un signal qui représente la phase instantanée du rotor du moteur à courant continu (1), **caractérisé en ce que** le générateur de motifs présente des moyens (22, 21) pour détecter l'intensité moyenne du courant délivré par l'onduleur et des moyens (3, 5, 8-23) pour régler un angle d'avance entre la phase du rotor et le motif de signaux de commutation en fonction de l'intensité moyenne du courant et de la vitesse de rotation du moteur (1) qui ont été détectées, **en ce que** le dispositif de commande présente des moyens (21-23) pour régler la tension moyenne aux bornes du moteur (1) sur base d'une vitesse de rotation de consigne et **en ce que** le dispositif de commande est configuré en vue de mettre en oeuvre le procédé selon l'une des revendications 1 à 4.

6. Dispositif de commande selon la revendication 5, **caractérisé en ce que** les moyens (3, 5, 8-23) pour régler l'angle d'avance comprennent un circuit PLL (3, 5, 8-20) qui peut se caler sur la fréquence du signal d'entrée qui représente la phase du rotor.

7. Dispositif de commande selon les revendications 5 ou 6, **caractérisé en ce que** les moyens (3, 5, 8-23) pour régler l'angle d'avance comprennent des moyens de commande (21, 23) pour définir une valeur de consigne de l'angle d'avance en fonction de la puissance et de la vitesse de rotation du rotor qui ont été détectées.

8. Dispositif de commande selon la revendication 7, **caractérisé en ce que** les moyens de commande (21, 23) comprennent une mémoire (23) pour un champ de caractéristiques du moteur (1) et qui donne la valeur de consigne de l'angle d'avance qui minimise le courant consommé par le moteur (1) pour différentes combinaisons de la vitesse de rotation et de la puissance du moteur.

9. Dispositif de commande selon l'une des revendications 5 à 8, **caractérisé en ce que** les moyens (3, 5, 8-23) pour régler l'angle d'avance comprennent des moyens (21) pour déduire la vitesse de rotation d'un signal d'entrée qui représente la phase du rotor.

10. Dispositif de commande selon l'une des revendications 5 à 9, **caractérisé en ce que** les moyens pour régler l'angle d'avance comprennent un générateur (21, 23) de valeurs de consigne pour créer un signal qui représente une valeur de consigne de l'angle d'avance et un régulateur pour égaliser l'angle d'avance effectif à la valeur de consigne à l'aide du signal représentatif, le signal représentatif pouvant prendre des valeurs supérieures et des valeurs inférieures à une valeur qui représente un angle d'avance de 0°.
